(19) **Europäisches Patentamt**
**European Patent Office**
**Office européen des brevets**

(11) **EP 2 725 439 B1**

(12) **EUROPEAN PATENT SPECIFICATION**

(45) Date of publication and mention
of the grant of the patent:
**29.05.2019 Bulletin 2019/22**

(51) Int Cl.:
**G05B 19/4093** *(2006.01)*

(21) Application number: **13005114.7**

(22) Date of filing: **27.10.2013**

(54) **Automatic machining path generation**

Automatische Erstellung eines Bearbeitungswegs für eine Maschine

Génération automatique de voie d'usinage pour une machine

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.10.2012 JP 2012237190**

(43) Date of publication of application:
**30.04.2014 Bulletin 2014/18**

(73) Proprietors:
• **Hitachi, Ltd.**
**Tokyo 100-8280 (JP)**
• **Computer And Automation Research Institute
Hungarian Academy of Sciences
Budapest 1111 (HU)**

(72) Inventors:
• **Nakano, Takahiro**
**Tokyo, 100-8280 (JP)**
• **Nonaka, Yoichi**
**Tokyo, 100-8280 (JP)**
• **Monostori, Laszlo**
**1111 Budapest (HU)**
• **Erdos, Gabor**
**1111 Budapest (HU)**
• **Kis, Tamas**
**1111 Budapest (HU)**
• **Kovacs, Andras**
**1111 Budapest (HU)**
• **Vancza, Jozsef**
**1111 Budapest (HU)**

(74) Representative: **Strehl Schübel-Hopf & Partner
Maximilianstrasse 54
80538 München (DE)**

(56) References cited:
**EP-A2- 0 503 642     EP-A2- 1 443 374**

**Description**

Background of the Invention

The present invention relates to a process schedule support apparatus, a process schedule support program, and a process schedule support method.

Japanese Patent Laid-open Publication No. H04-372002 includes the description that reads " ...has an object to efficiently produce a control operation program for a production line by expressing inputs, intermediate processing data, and results handled in a process design upstream of a production activity so as to be easily converted into a data format required in a production scheduling system and a production preparation work support system such as an NC automatic programming system, and integrating production scheduling and production information preparation work based on processing results of the process design."

By the way, in conventional NC data creation, a processing process is planned based on empirical knowledge of a CAM operator in an enormous number of combinations of selection/arrangement setting of tools/processing machines, processing area setting, and processing condition setting, and hence a processing time for a processing process plan may vary, instead of becoming shortest, depending on a degree of the CAM operator's experience.

The technology disclosed in Japanese Patent Laid-open Publication No. H04-372002 is a technology for calling information from a database in which NC data is registered manually in advance. Therefore, there are cases where the registered information may not be optimal depending on a degree of the experience of a person who registers information in the database, and the NC data created by using the database may not also be optimal.

EP 1 443 374 A2 discloses an apparatus with the features in the preamble of present claim 1.

EP 0 503 642 A2 describes another example of a conventional process schedule control apparatus.

Summary of the Invention

The present invention has been made in view of the above-mentioned circumstances, and an object of the present invention is to allow an optimal work procedure using a processing machine to be automatically generated irrespective of whether or not an operator has experience relating thereto.

In order to achieve the above-mentioned object, for example, configurations described in Claims are employed.

According to one embodiment of the present invention, the optimal work procedure using the processing machine may be automatically generated irrespective of whether or not the operator has experience relating thereto.

Brief Description of the Drawings

In the accompanying drawings:

FIG. 1 is a system configuration diagram illustrating an example of a functional configuration of a processing system 10 according to an embodiment of the present invention;

FIG. 2 is a block diagram illustrating an example of a functional configuration of a process schedule support apparatus 20 according to a first embodiment of the present invention;

FIG. 3 is a conceptual diagram showing an example of processing machine data 210 stored in a storage unit 21;

FIG. 4 is a conceptual diagram showing an example of tool data 211 stored in the storage unit 21;

FIG. 5 is a conceptual diagram for illustrating an example of respective dimensions of a tool and a holder;

FIG. 6 is a conceptual diagram showing an example of processing machine condition data 212 stored in the storage unit 21;

FIG. 7 is a conceptual diagram showing an example of product CAD data 213 stored in the storage unit 21;

FIG. 8 is a conceptual diagram showing an example of material CAD data 214 stored in the storage unit 21;

FIG. 9 is a conceptual diagram for illustrating an example of an arrangement plane 400 and an arrangement plane 401;

FIGS. 10A to 10C are conceptual diagrams for illustrating a process of calculating a removal area 42;

FIG. 11 is a conceptual diagram for illustrating an example of a method of dividing the removal area 42;

FIG. 12 is a conceptual diagram for illustrating an example of a divided area 43;

FIG. 13 is a conceptual diagram for illustrating an example of a result display screen 50;

FIG. 14 is a flowchart illustrating an example of an operation of the process schedule support apparatus 20;

FIG. 15 is a block diagram illustrating an example of a functional configuration of the process schedule support apparatus 20 according to a second embodiment of the present invention;

FIG. 16 is a conceptual diagram showing an example of an input amount data 215 stored in the storage unit 21 according to the second embodiment;

FIG. 17 is a conceptual diagram illustrating an example of a processing machine allocation planning screen 60; and

FIG. 18 is a diagram illustrating an example of a hardware configuration of a computer 70 which realizes a function of the process schedule support apparatus 20.

Description of the Preferred Embodiments

First, a first embodiment of the present invention is described with reference to the accompanying drawings.

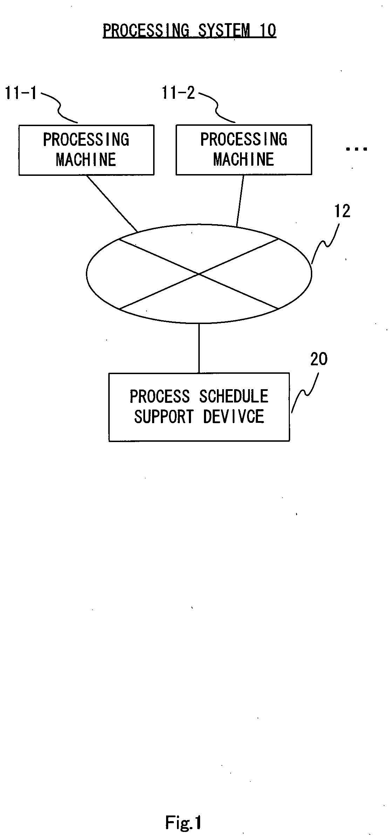

FIG. 1 is a system configuration diagram illustrating an example of a functional configuration of a processing system 10 according to an embodiment of the present invention. The processing system 10 includes a process schedule support apparatus 20 and a plurality of processing machines 11-1, 11-2, and the like (hereinafter referred to collectively as "11"). The process schedule support apparatus 20 and each of the processing machines 11 are connected to a communication line 12, and can communicate to/from one another through the communication line 12.

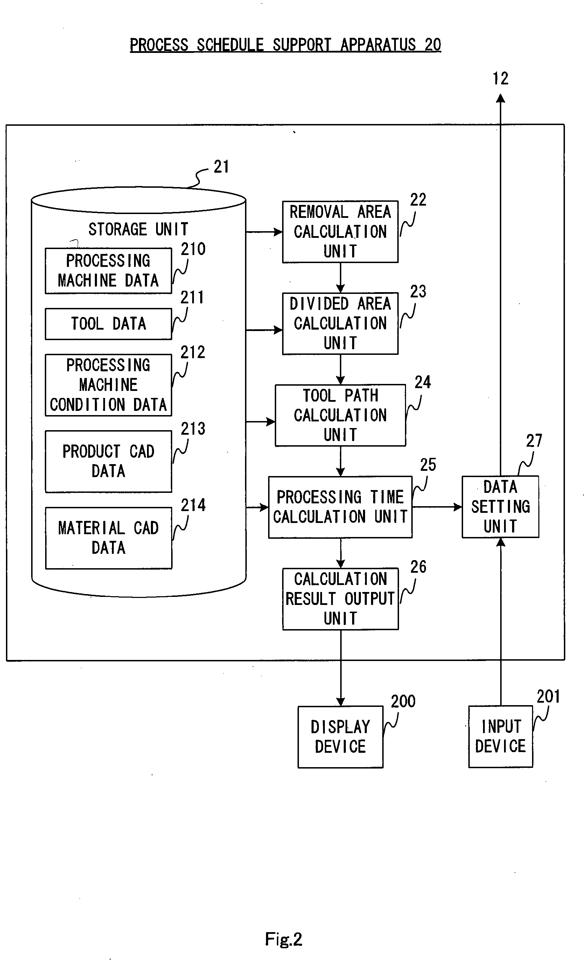

FIG. 2 is a block diagram illustrating an example of a functional configuration of the process schedule support apparatus 20 according to the first embodiment of the present invention. The process schedule support apparatus 20 includes a storage unit 21, a removal area calculation unit 22, a divided area calculation unit 23, a tool path calculation unit 24, a processing time calculation unit 25, and a calculation result output unit 26. The storage unit 21 stores processing machine data 210, tool data 211, processing machine condition data 212, product CAD data 213, and material CAD data 214.

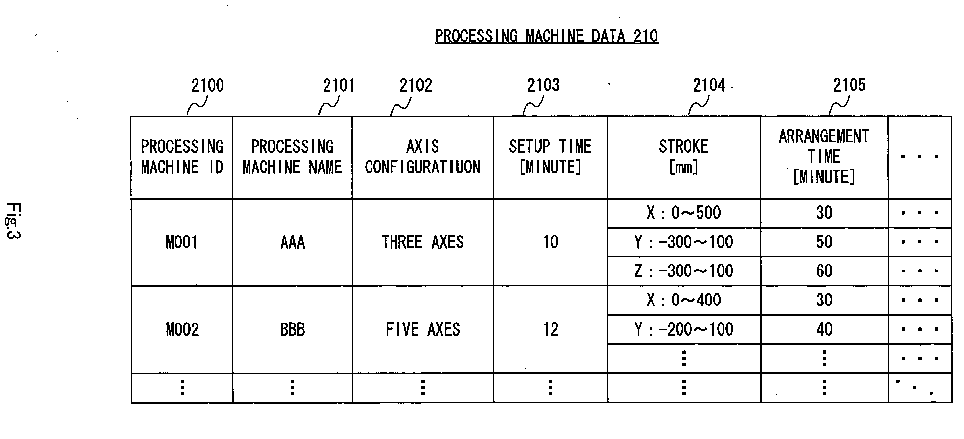

FIG. 3 is a conceptual diagram showing an example of the processing machine data 210 stored in the storage unit 21. The processing machine data 210 stores in advance a processing machine name 2101, an axis configuration 2102, a setup time 2103, and the like in association withaprocessingmachine ID 2100 which identifies each processing machine. Further, the processing machine ID 2100 stores in advance a stroke 2104, an arrangement time 2105, and the like for each of axes of the axis configuration 2102.

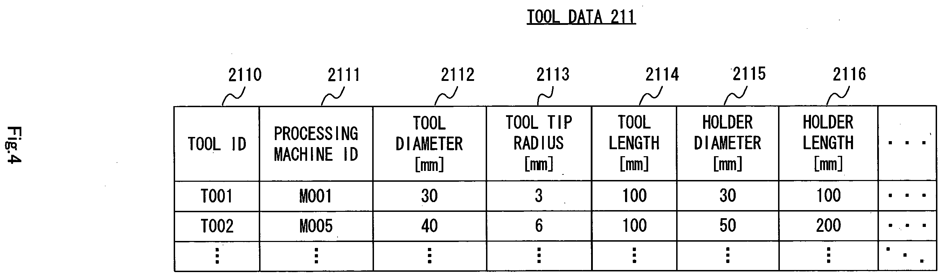

FIG. 4 is a conceptual diagram showing an example of the tool data 211 stored in the storage unit 21. The tool data 211 stores in advance a processing machine ID 2111 of the processing machine to which the tool is to be mounted, a tool diameter 2112, a tool tip radius 2113, a tool length 2114, a holder diameter 2115, a holder length 2116, and the like in association with a tool ID 2110 which identifies each tool.

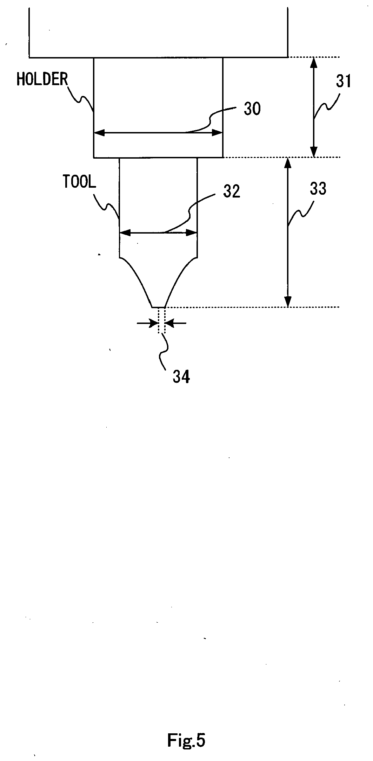

FIG. 5 is a conceptual diagram for illustrating an example of respective dimensions of a tool and a holder. In the tool data 211 shown in FIG. 4, the tool diameter 2112 represents, for example, a dimension indicated by reference numeral 32, the tool tip radius 2113 represents, for example, a dimension indicated by reference numeral 34, the tool length 2114 represents, for example, a dimension indicated by reference numeral 33, the holder diameter 2115 represents, for example, a dimension indicated by reference numeral 30, the holder length 2116 represents, for example, a dimension indicated by reference numeral 31.

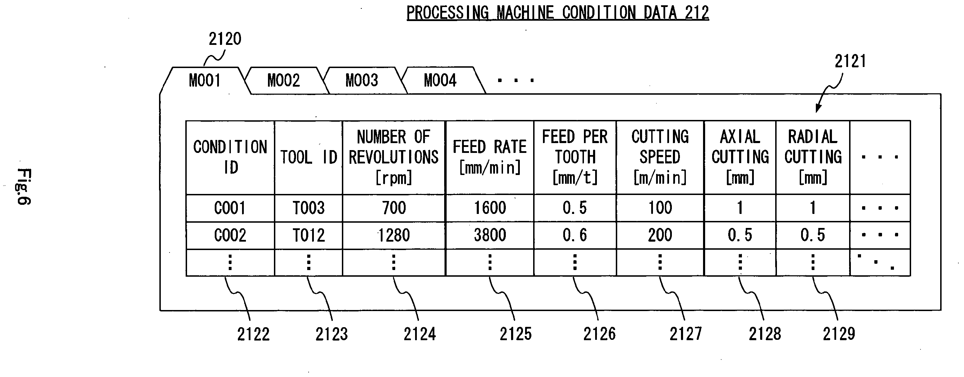

FIG. 6 is a conceptual diagram showing an example of the processing machine condition data 212 stored in the storage unit 21. The processing machine condition data 212 stores in advance a condition table 2121 in association with a material ID 2120 which identifies each material. Each condition table 2121 stores in advance a tool ID 2123 of the tool to be used, a number of revolutions 2124, a feed rate 2125, a feed per tooth 2126, a cutting speed 2127, an axial cutting 2128, and a radial cutting 2129 in association with a condition ID 2122 which identifies each processing condition.

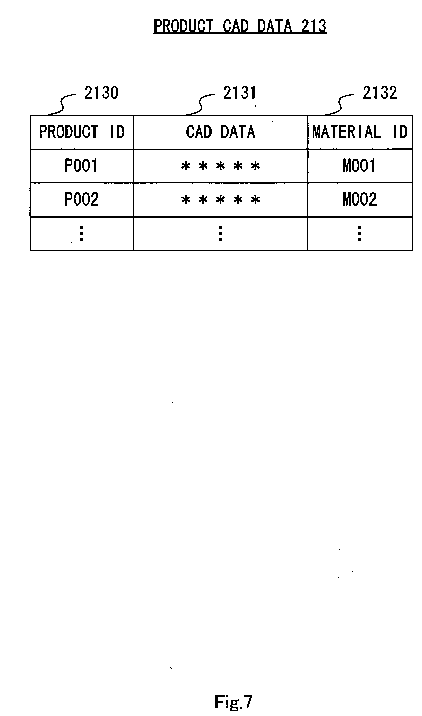

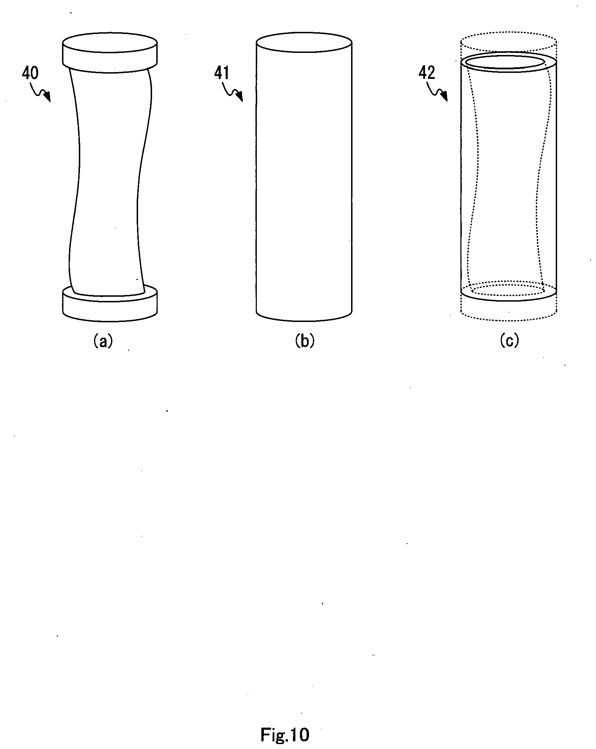

FIG. 7 is a conceptual diagram showing an example of the product CAD data 213 stored in the storage unit 21. The product CAD data 213 stores in advance CAD data 2131 which indicates a shape of the product as illustrated in, for example, FIG. 10A and a material ID 2132 of a material used to process the product in association with a product ID 2130 which identifies each product.

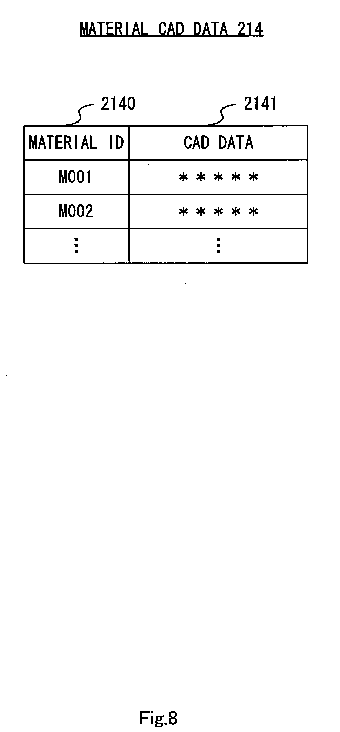

FIG. 8 is a conceptual diagram showing an example of the material CAD data 214 stored in the storage unit 21. The material CAD data 214 stores in advance CAD data 2141 which indicates a shape of the material as illustrated in, for example, FIG. 10B in association with a material ID 2140 which identifies each material.

Returning to FIG. 2, the description is continued. The removal area calculation unit 22 refers to the CAD data within the product CAD data 213 for eachproduct, and uses information on a characteristic flat plane (face plane) included in the CAD data to create an arrangement plane for each processing machine fromaplane indicating a boundary between an area in which the product is grasped by the processing machine when being processed and an area in which the product may be processed by the processing machine.

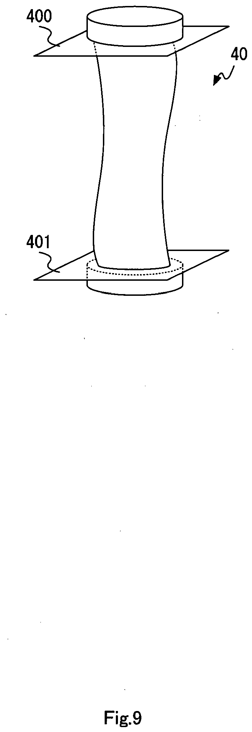

FIG. 9 is a conceptual diagram for illustrating an example of an arrangement plane 400 and an arrangement plane 401. The removal area calculation unit 22 calculates, for example, the arrangement plane 400 and the arrangement plane 401 as the arrangement planes from the CAD data on a product shape 40.

FIGS. 10A to 10C are conceptual diagrams for illustrating a process of calculating a removal area 42. The removal area calculation unit 22 then, for each product, extracts the CAD data on a product shape from the product CAD data 213, and extracts the CAD data on a material used to process the product from the material CAD data 214. Then, the removal area calculation unit 22 uses those pieces of CAD data to calculate the removal area 42 as illustrated in, for example, FIG. 10C indicating an area to be removed from a difference between the product shape 40 as illustrated in, for example, FIG. 10A and a material shape 41 as illustrated in, for example, FIG. 10B. Then, the removal area calculation unit 22 sends the removal area 42 calculated for each product to the divided area calculation unit 23.

The divided area calculation unit 23 refers to the processing machine data 210 for each removal area 42 of the product, and calculates the arrangement plane from a plane (which does not need to be flat plane) which defines a limit to a movable range of each processing machine. Then, the divided area calculation unit 23 divides the removal area 42 by the arrangement plane calculated for each processing machine, to create a divided area.

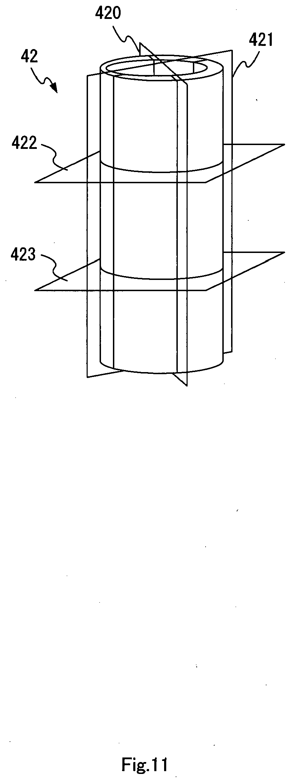

FIG. 11 is a conceptual diagram for illustrating an example of a method of dividing the removal area 42. In the example illustrated in FIG. 11, an arrangement plane 420, an arrangement plane 421, an arrangement plane 422, and an arrangement plane 423 are separately calculated for a plurality of processing machines, and the removal area 42 is divided by those calculated planes. The removal area 42 is thus divided by the plane that defines the limit to the movable range of each processing machine, and hence, for each divided area, at least one processing machine that may completely remove the each divided area always exists.

Note that, for example, in a case of a three-axis processing machine, one arrangement plane is calculated when a material is grasped at a given angle, but if the angle at which to grasp the material is changed, different arrangement planes exist for the material, to thereby necessitate calculation of the arrangement planes by the number of times that the angle is changed. Therefore, in this embodiment, when the angle at which to grasp the material has a degree of freedom of 360 degrees, the divided area calculation unit 23 calculates four arrangement planes at intervals of, for example, 90 degrees in order to speed up the processing.

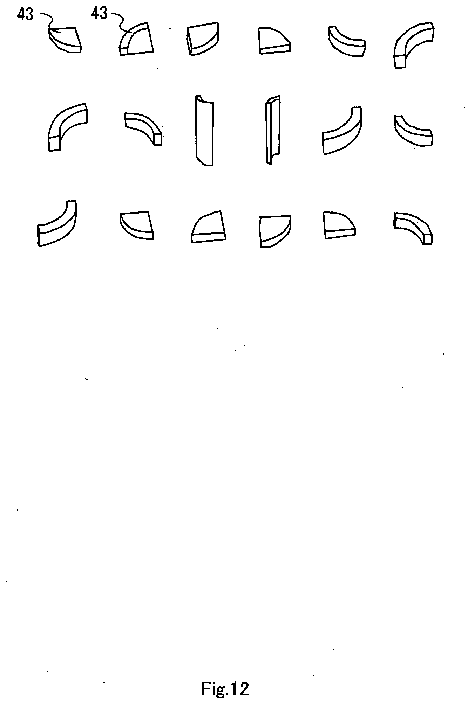

FIG. 12 is a conceptual diagram for illustrating an example of a divided area 43. The removal area 42 is divided by a plurality of arrangement planes as illustrated in FIG. 11, to thereby generate a plurality of divided areas 43 by the divided area calculation unit 23 as illustrated in FIG. 12. The divided area calculation unit 23 sends information on each of the divided areas 43 generated for each product to the tool path calculation unit 24.

The tool path calculation unit 24 refers to the processing machine data 210 and the tool data 211 for each of the divided areas 43 calculated for each product, to generate a tool path being a locus of the tool for removing the divided area 43 for each processing machine. For one of the divided areas 43, one tool path for each of all the processing machines is calculated. Then, the tool path calculation unit 24 sends data on the tool paths, which are calculated for each of the divided areas 43 to be used by the respective processing machines, to the processing time calculation unit 25 for each product.

When the information on the tool paths, which are calculated for each of the divided areas 43 to be used by the respective processing machines, is received from the tool path calculation unit 24 for each product, the processing time calculation unit 25 refers to the product CAD data 213, to identify a material ID of the material used to process the product for each product. Then, the processing time calculation unit 25 identifies the condition table 2121 within the processing machine condition data 212 based on the identified material ID.

Subsequently, the processing time calculation unit 25 refers to the tool data 211 for each processing machine, to identify a tool ID of the tool used by the each processing machine. Then, for each combination of the product and the divided area 4 3 , the processing time calculation unit 25 refers to the condition table 2121 for the tool of each processing machine, to extract the processing condition to be applied in a case where the tool is used. Then, the processing time calculation unit 25 calculates the processing time, which is to be required in a case where the tool is moved along the tool path based on the length of the tool path calculated by the tool path calculation unit 24 on the extracted processing condition, for each combination of the product, the divided area 43, and the processing machine.

Subsequently, the processing time calculation unit 25 uses information on all the processing times calculated for each combination of the product, the divided area 43, and the processing machine, to calculate, for each product, a combination of the processing times for each of the divided areas 43 which has the minimum total processing time. The processing time calculation unit 25 obtains a total processing time L as, for example, mixed integer programming problems expressed by the following Mathematical Expressions 1 to 9 by, for example, a branch-and-bound method.

$$\text{Minimize} \quad L \qquad \cdots (1)$$

$$Z_{\mu,\omega,\varepsilon} \leq y_{\mu,\omega,j(\varepsilon),s(\varepsilon)} \qquad \forall \mu,\omega,\varepsilon \qquad \cdots (2)$$

$$y_{\mu,\omega,j,s} \leq x_{\mu,j} \qquad \forall \mu,\omega,j,s \qquad \cdots (3)$$

$$\sum_{j} x_{\mu,j} \le 1 \qquad \forall \mu \qquad \cdots (4)$$

$$\sum_{j} y_{\mu,\omega,j,s} \le 1 \qquad \forall \mu,\omega \qquad \cdots (5)$$

$$\sum_{\mu,\omega,\varepsilon:v(\varepsilon)=v} z_{\mu,\omega,\varepsilon} = 1 \qquad \forall v \qquad \cdots (6)$$

$$z_{\mu,\omega,\varepsilon} \le \sum_{\mu',\omega',\varepsilon':v(\varepsilon')=v \wedge (\mu>\mu' \vee \mu=\mu' \wedge \omega \ge \omega')} z_{\mu,\omega,\varepsilon} \qquad \forall \mu,\omega,\varepsilon, v \in A(\varepsilon) \qquad \cdots (7)$$

$$L = \sum_{\mu,j} h_j x_{\mu,j} + \sum_{\mu,\omega,j,s} d_j y_{\mu,\omega,j,s} + \sum_{\mu,\omega,\varepsilon} t(\varepsilon) z_{\mu,\omega,\varepsilon} \qquad \cdots (8)$$

$$x_{\mu,j}, y_{\mu,\omega,j,s}, z_{\mu,\omega,\varepsilon} \in \{0,1\} \qquad \forall \mu,\omega,\varepsilon,j,s \qquad \cdots (9)$$

The descriptions of subscripts, parameters, and variables used in the above-mentioned Mathematical Expressions 1 to 9 are shown below in Table 1.

(Table 1)

| Subscript | Description |
|---|---|
| j | Identifier of processing machine |
| s | Identifier of arrangement plane |
| v | Identifier of divided area |
| w | Identifier of processing process |
| μ | Identifier of processing process carried out by one processing machine |
| ω | Identifier of processing process that may perform processing with one grasp |
| ε | Identifier of processing process carried out in one processing area |
| **Parameter** | **Description** |
| $h_j$ | Setup time for processing machine j |
| $d_j$ | Arrangement time for processing machine j |
| $K_j$ | Processing quantity (1 in this embodiment) of processing machine j |
| $v(\varepsilon)$ | Divided area to be removed by processing process ε |
| $j(\varepsilon)$ | Processing machine used to carry out processing process ε |
| $s(\varepsilon)$ | Arrangement of processing process ε |
| $t(\varepsilon)$ | Processing time for processing process ε |
| $A(\varepsilon)$ | Divided area adjacent to divided area to be processed in processing process ε |

(continued)

| Variable | Description |
|---|---|
| $X_{\mu,j}$ | 1 If processing process $\mu$ is to be carried out by processing machine j, and otherwise 0 |
| $Y_{\mu,\omega,j,s}$ | 1 If processing processes $\mu$ and $\omega$ are to be carried out by arrangement plane s by processing machine j, and otherwise 0 |
| $Z_{\mu,\omega,\varepsilon}$ | 1 If processing process $\varepsilon$ is to be carried out in processing process $\mu$ and $\omega$, and otherwise 0 |

The above-mentioned Mathematical Expression 1 indicates that a process plan which minimizes the total processing time L by using the total processing time L for a processing process plan as an objective function is created.

Mathematical Expression 2 and Mathematical Expression 3 indicate that a processing process is carried out by the selected arrangement plane and by the selected processing machine.

Mathematical Expression 4 and Mathematical Expression 5 indicate that the processing process is carried out at most one processing machine with at most one grasp.

Mathematical Expression 6 indicates that the divided area needs to be removed in one-time processing performed by any one of the processing machines.

Mathematical Expression 7 indicates that the divided areas, which are continuously processed, are adjacent to each other.

Mathematical Expression 8 indicates a definition of the total processing time L for the processing process plan.

Mathematical Expression 9 indicates a value range of the variable.

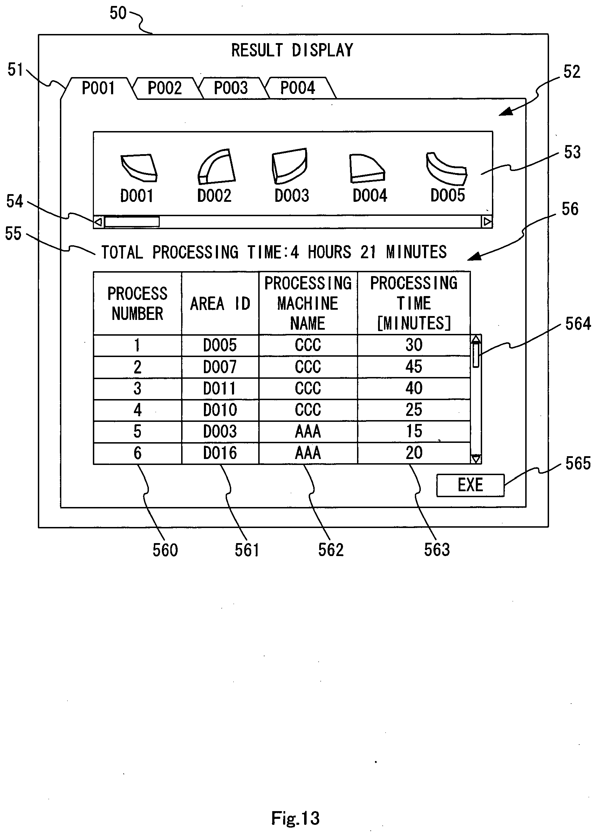

The processing time calculation unit 25 sends the minimum total processing time L calculated for each product by using the above-mentioned Mathematical Expressions 1 to 9, the processing times for the respective divided areas included in the total processing time L, and process numbers indicating an order of processing the respective divided areas to the calculation result output unit 26, and sends the data on the tool paths for each of the divided area, which achieve the minimum total processing time L, to a data settingunit 27 for each product. Based on the information received from the processing time calculation unit 25, the calculation result output unit 26 creates a result display screen 50 as illustrated in, for example, FIG. 13, and displays the result display screen 50 on a display device 200.

FIG. 13 is a conceptual diagram for illustrating an example of the result display screen 50. Processing information 52 is displayed on the result display screen 50 for each product ID 51. Each piece of processing information 52 is provided with an area 53 in which a shape of the divided area is displayed for each area ID identifying each divided area. A user is allowed to confirm the shapes of all the divided areas by operating a slider 54 through the input device 201.

Further, each piece of processing information 52 is provided with an area 55 in which the total processing time calculated by the processing time calculation unit 25 is displayed, below which a processing time table 56 showing a breakdown of the total processing time is displayed.

The processing time table 56 includes an area ID 561 of the divided area to be removed in the processing process, a processing machine name 562 of the processing machine used to remove the divided area, and a processing time 563 required to remove the divided area, and the like in association with a process number 560 indicating the order of the respective processingprocesses . The user is allowed to refer to those pieces of information for all the process numbers by operating a slider 564 through the input device 201.

When the user presses an "execute" button 565 through the input device 201, the data setting unit 27 transfers the data on the tool paths for each of the divided areas calculated for the product having the product ID 51 to the processing machine used to process the divided area through the communication line 12 based on the product ID 51 of the processing information 52 including the pressed "execute" button 565.

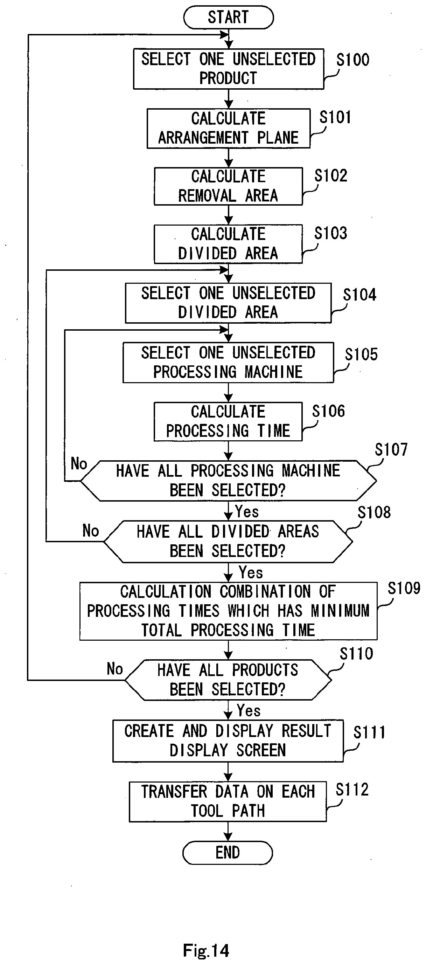

FIG. 14 is a flowchart illustrating an example of an operation of the process schedule support apparatus 20. The process schedule support apparatus 20 starts the operation illustrated in this flowchart when, for example, receiving an instruction from the user through the input device 201.

First, the removal area calculation unit 22 refers to the product CAD data 213 to select one unselected product ID (S100). Then, the removal area calculation unit 22 extracts the CAD data associated with the selected product ID from the product CAD data 213, and uses information on a characteristic flat plane included in the CAD data to calculate the arrangement plane indicating a boundary between the area in which the product is grasped by the processing machine when being processed and the area in which the product may be processed by the processing machine (S101).

Subsequently, the removal area calculation unit 22 extracts the material ID associated with the product ID selected in S100 from the product CAD data 213, and extracts the CAD data associated with the extracted material ID from the material CAD data 214. Then, the removal area calculation unit 22 uses those pieces of CAD data to calculate a removal area indicating the area to be removed from a difference between the product shape and a material shape as illustrated in FIG. 10C (S102), and sends the information on the calculated removal area to the divided area calculation unit 23.

Subsequently, the divided area calculation unit 23 refers to the processing machine data 210 for each processing machine, to calculate the arrangement plane from the plane which defines a limit to the movable range of each processing machine. Then, the divided area calculation unit 23 divides the removal area by the arrangement plane calculated for each processing machine, to calculate the divided area (S103), and sends the information on each of the calculated divided areas to the tool path calculation unit 24.

Subsequently, the tool path calculation unit 24 selects one unselected divided area among the divided areas received from the divided area calculation unit 23 (S104). Then, the tool path calculation unit 24 refers to the processing machine data 210 to select one unselected processing machine (S105), refers to the tool data 211 on the selected processing machine to generate the tool path being a locus of the tool for removing the divided area selected in Step S104, and sends the data on the generated tool path to the processing time calculation unit 25.

Subsequently, the processing time calculation unit 25 refers to the tool data 211 on the processing machine selected in Step S105 to identify the tool ID of the tool used by the processing machine, and extracts the processing condition to be applied in the case where the tool is used from the processing machine condition data 212. Then, the processing time calculation unit 25 calculates the processing time to be required in the case where the tool is moved along the tool path based on the length of the tool path generated by the tool path calculation unit 24 on the extracted processing condition (S106).

Subsequently, the tool path calculation unit 24 refers to the processing machine data 210 to determine whether or not all the processing machines have been selected (S107). If there is an unselectedprocessingmachine (NoinS107), the tool path calculation unit 24 again executes the processing illustrated in Step S105. On the other hand, if all the processing machines have been selected (Yes in S107), the tool path calculation unit 24 determines whether or not all the divided areas have been selected (S108). If there is an unselected divided area (No in S108), the tool path calculation unit 24 again executes the processing illustrated in Step S104.

On the other hand, if all the divided areas have been selected (Yes in S108), the processing time calculation unit 25 uses the information on all the processing times calculated for each combination of the divided area and the processing machine, to calculate a combination of the processing times which has the minimum total processing time Las, for example, the mixed integer programming problems expressed by the above-mentioned Mathematical Expressions 1 to 9 by, for example, the branch-and-bound method (S109), and sends those calculated pieces of information to the calculation result output unit 26.

Subsequently, the removal area calculation unit 22 refers to the product CAD data 213 to determine whether or not all the product IDs have been selected (S110). If there is an unselected product ID (No in S110), the removal area calculation unit 22 again executes the processing illustrated in Step S100. On the other hand, if all the product IDs have been selected (Yes in S110), based on the information received from the processing time calculation unit 25, the calculation result output unit 26 creates the result display screen 50 described with reference to, for example, FIG. 13, and displays the result display screen 50 on the display device 200 (Sill).

After confirming the total processing time calculated for each product ID and the content of a processing time table, when the execution button is pressed by the user, the data setting unit 27 transfers the data on the tool path to each of the processing machines 11 through the communication line 12 (S112), and the process schedule support apparatus 20 finishes the operation illustrated in the flowchart.

The above description has been directed to the first embodiment of the present invention.

As apparent from the above description, according to the process schedule support apparatus 20 of this embodiment, it is possible to automatically generate an optimal work procedure using processing machines irrespective of whether or not an operator has experience.

Next, a second embodiment of the present invention is described with reference to the accompanying drawings.

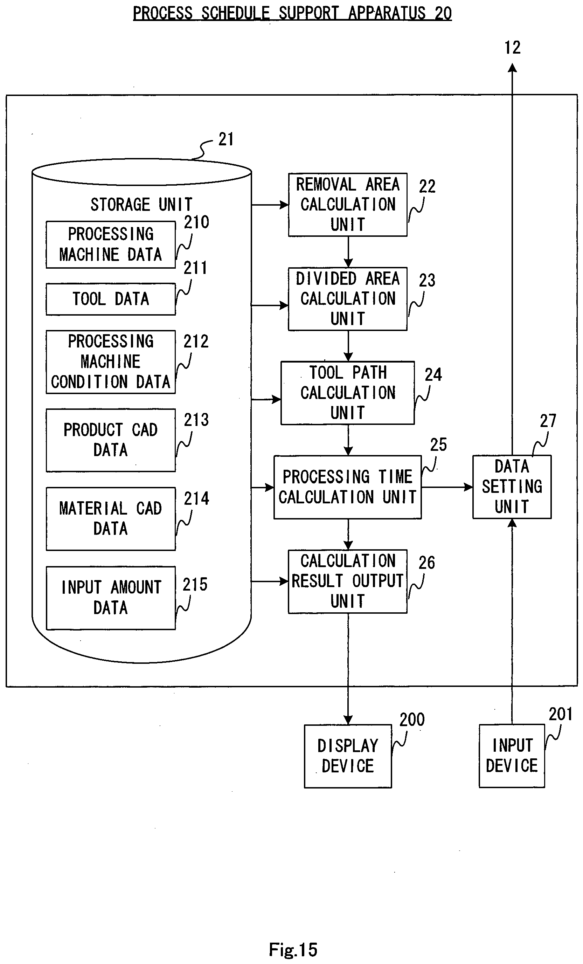

FIG. 15 is a block diagram illustrating an example of a functional configuration of the process schedule support apparatus 20 according to the second embodiment. Note that, except for points described below, in FIG. 15, components denoted by the same reference numerals as those in FIG., 2 have the same or similar functions as/to the components illustrated in FIG. 2, and hence descriptions thereof are omitted.

The storage unit 21 according to this embodiment stores the processingmachine data 210 , the tool data 211, the processingmachine condition data 212, the product CAD data 213, the material CAD data 214, and an input amount data 215.

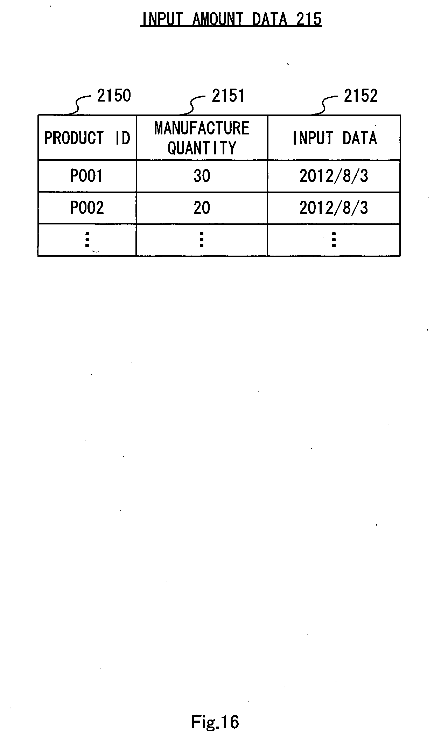

FIG. 16 is a conceptual diagram showing an example of the input amount data 215 stored in the storage unit 21 according to the second embodiment. The input amount data 215 stores in advance a manufacture quantity 2151 of the product and an input date 2152 for the materials necessary to manufacture the product in association with a product ID 2150 which identifies each product.

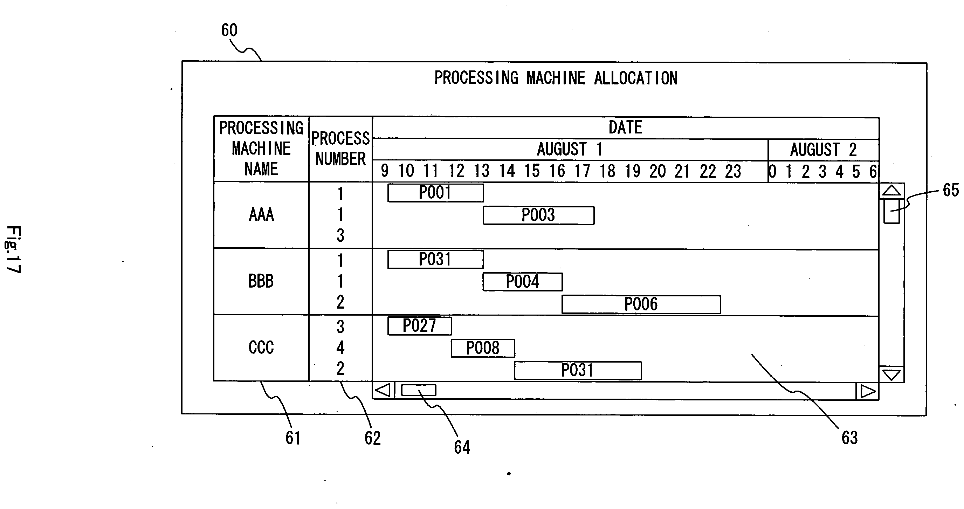

When receiving the minimum total processing time L calculated for each product by the processing time calculation unit 25, the processing times for the respective divided areas included in the total processing time L, and the process numbers indicating the order of processing the respective divided areas, the calculation result output unit 26 according to this embodiment refers to the input amount data 215 for each product, to create a Gantt chart in which the processing times for the respective processes are mapped with reference to the day on which materials of the product are input. Then, the calculation result output unit 26 combines the created Gantt charts for each processing machine to create a processing machine allocation planning screen 60 as illustrated in, for example, FIG. 17, and displays the created processing machine allocation planning screen 60 on the display device 200.

FIG. 17 is a conceptual diagram illustrating an example of the processing machine allocation planning screen 60. The processing machine allocation planning screen 60 includes an area 61 in which a processing machine name is displayed, an area 62 in which a process number is displayed, and an area 63 in which the Gantt chart is displayed for each process and for each product. The user is allowed to confirm the process number of the process to be performed by each processing machine, the date on which the process is to be performed, the ID of the product to be processed in the process, and the like by operating a slider 64 or a slider 65 through the input device 201.

The above description has been directed to the second embodiment of the present invention.

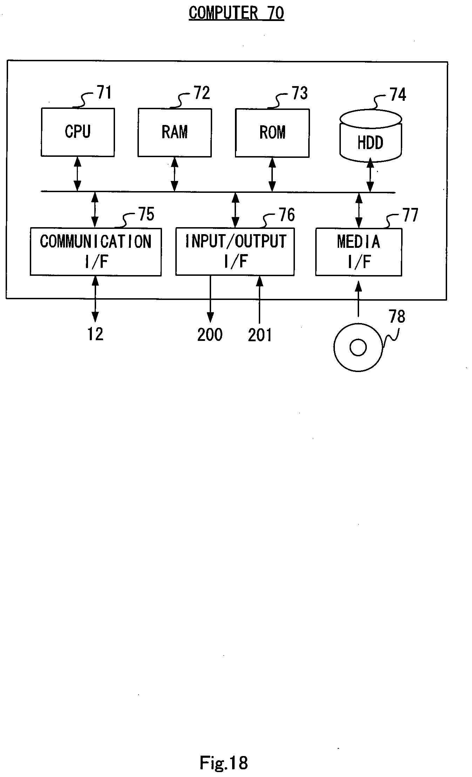

Note that, the process schedule support apparatus 20 according to the above-mentioned first or second embodiment is realized by a computer 70 having such a configuration as illustrated in, for example, FIG. 18.

FIG. 18 is a hardware configuration diagram illustrating an example of a hardware configuration of the computer 70 which realizes a function of the process schedule support apparatus 20. The computer 70 includes a central processing unit (CPU) 71, a random access memory (RAM) 72, a read only memory (ROM) 73, a hard disk drive (HDD) 74, a communication interface (I/F) 75, an input/output interface (I/F) 76, and a media interface (I/F) 77.

The CPU 71 operates based on a program stored in the ROM 73 or the HDD 74 to control each unit. The ROM 73 stores a boot program executed by the CPU 71 upon booting of the computer 70, a program which depends on hardware of the computer 70, and the like.

The HDD 74 stores a program executed by the CPU 71, data used by the program, and the like. The communication interface 75 receives data from another device through the communication line 12 to send the data to the CPU 71, and transmits the data generated by the CPU 71 to another device through the communication line 12.

The CPU 71 controls the display device 200 and the input device 201 through the input/output interface 76. The CPU 71 acquires a signal from the input device 201 through the input/output interface 76. Further, the CPU 71 outputs the generated signal to the display device 200 through the input/output interface 76.

The media interface 77 reads the program or data stored in a recording medium 78, and provides the program or data to the CPU 71 through the intermediation of the RAM 72. The CPU 71 loads the program from the recording medium 78 onto the RAM 72 through the media interface 77, and executes the loaded program. The recording medium 78 is, for example, an optical recording medium such as a digital versatile disc (DVD) or a phase change rewritable disk (PD), magneto-optical recording medium such as a magneto-optical disk (MO), a tape medium, a magnetic recording medium, or a semiconductor memory.

The CPU 71 of the computer 70 executes the programs loaded onto the RAM 72, to thereby realize respective functions of the removal area calculation unit 22, the divided area calculation unit 23, the tool path calculation unit 24, the processing time calculation unit 25, the calculation result output unit 26, and the data setting unit 27. Further, the data within the storage unit 21 is stored in the ROM 73 and the HDD 74.

The CPU 71 of the computer 70 reads those programs from the recording medium 78 to execute those programs, but as another example, those programs may be acquired from another device through the communication line 12.

Further, the present invention is not limited to each of the above-mentioned embodiments, and various changes may be made thereto within the scope of the invention as defined in the appended claims. For example, in the above-mentioned first embodiment, the combination of the tool paths which achieves the minimum total processing time is displayed for each product on the result display screen 50, but the present invention is not limited thereto, and the result display screen 50 may display, for each product, a predetermined number of combinations of the tool paths in ascending order of the total processing time from the combination achieving the shortest total processing time. With this configuration, it is possible to increase the degree of freedom in the selection of the processing machine.

Further, the above-mentioned embodiments have been described in detail for the sake of an easy understanding of the present invention, and the present invention is not necessarily limited to the configuration including all the described components. Further, within the scope of the invention as defined in the appended claims, part of the configuration of a given embodiment may be replaced by components of another embodiment, and a component of a given embodiment may be added to the configuration of another embodiment. Further, part of the configuration of each embodiment may be subjected to addition, deletion, or replacement of another component.

Further, within the scope of the invention as defined in the appended claims, the description and illustration relating to the above-mentioned embodiments include control lines and information lines which are considered to be necessary for the sake of description, but do not necessarily include all the control lines or the information lines that are necessary for the product. In actuality, it may be assumed that almost all the components are connected to one another.

**Claims**

1. A process schedule support apparatus (20), which supports creation of control data for a plurality of processing machines (11), comprising:

  a removal area calculation unit (22) configured to calculate a removal area (42) based on a difference between a product shape (40) of a product and a material shape (41) of a material used to process the product;
  a divided area calculation unit (23) configured to generate a plurality of divided areas (43) by dividing the removal area (42);
  a tool path calculation unit (24) configured to generate tool paths, which are used to remove the divided areas (43) by respective ones of the processing machines (11), for each divided area (43); and
  a processing time calculation unit (25) configured to calculate a combination of the tool paths so that a time period for removing all the divided areas (43) becomes minimum,
  **characterised in that** the divided area calculation unit (23) is adapted to generate the divided areas (43) by dividing the removal area (42) by planes (420-423) which define limits to the movable range of each processing machine (11) being a candidate for performing work for removing the removal area (42) and which planes (420-423) have been calculated separately for said plurality of processing machines (11) and for different angles at which the material is grasped.

2. A process schedule support apparatus (20) according to claim 1, further comprising a calculation result output unit (26) configured to output, for the combination of the tool paths calculated by the processing time calculation unit (25) for each of the tool paths, a calculation result comprising at least one of:

  information on an order in which removal using the each of the tool paths is executed,
  information on the divided areas (43) to be removed along the each of the tool paths,
  information on the processing machines (11) to be used to remove the divided areas (43), or
  information on a time required to remove the divided areas (43) by using the each of the tool paths.

3. A process schedule support apparatus (20) according to claim 2, wherein:

  the processing time calculation unit (25) is adapted to calculate the information on a predetermined number of combinations of the tool paths in ascending order of the time required to remove all the divided areas (43) from the combination achieving the minimum time; and
  the calculation result output unit (26) is adapted to output the calculation results regarding the predetermined number of combinations of the tool paths calculated by the processing time calculation unit (25), the calculation results comprising information on the ascending order of the time required to remove all the divided areas (43) from the combination achieving the minimum time.

4. A process schedule support apparatus (20) according to claim 1, wherein:

  the removal area calculation unit (22) is adapted to calculate the removal area (42) for each of product shapes (40) of a plurality of products; and
  the processing time calculation unit (25) is adapted to calculate, for each of the plurality of products, a combination of the tool paths so that a time period for removing all the divided areas (43) becomes minimum.

5. A program for causing a computer to function as a process schedule support apparatus (20), which supports creation of control data for a plurality of processing machines (11), the program causing the computer to realize:

  a removal area calculation function of calculating a removal area (42) based on a difference between a product shape (40) of a product and a material shape (41) of a material used to process the product;
  a divided area calculation function of generating a plurality of divided areas (43) by dividing the removal area (42) by planes (420-423) which define limits to a movable range of each processing machine (11) being a candidate for performing work for removing the removal area (42) and which planes (420-423) have been calculated separately for said plurality of processing machines (11) and for different angles at which the material is grasped;
  a tool path generation function of generating tool paths, which are used to remove the divided areas (43) by respective ones of the processing machines (11), for each divided area (43); and
  a processing time calculation function of calculating a combination of the tool paths so that a time period for removing all the divided areas (43) becomes minimum.

6. A process planning support method for a process schedule support apparatus (20), which supports creation of control data for a plurality of processing machines (11), the process planning support method comprising:

a removal area calculation step of calculating, by the process schedule support apparatus (20), a removal area (42) based on a difference between a product shape (40) of a product and a material shape (41) of a material used to process the product;

a divided area calculation step of generating, by the process schedule support apparatus (20), a plurality of divided areas (43) by dividing the removal area (42) by planes (420-423) which define limits to a movable range of each processing machine (11) being a candidate for performing work for removing the removal area (42) and which planes (420-423) have been calculated separately for said plurality of processing machines (11) and for different angles at which the material is grasped;

a tool path generation step of generating, by the process schedule support apparatus (20), tool paths, which are used to remove the divided areas (43) by respective ones of the processing machines (11), for each divided area (43); and

a processing time calculation step of calculating, by the process schedule support apparatus (20), a combination of the tool paths so that a time period for removing all the divided areas (43) becomes minimum.

## Patentansprüche

1. Prozessplanungs-Unterstützungsgerät (20), das die Erzeugung von Steuerdaten für mehrere Verarbeitungsmaschinen (11) unterstützt, mit

einer Entfernungsbereichs-Berechnungseinheit (22), die dazu konfiguriert ist, eine Entfernungsfläche (42) basierend auf einer Differenz zwischen einer Produktform (40) eines Produkts und einer Materialform (41) eines zur Verarbeitung des Produkts verwendeten Materials zu berechnen,

einer Unterteilungsflächen-Berechnungseinheit (23), die dazu konfiguriert ist, mehrere Unterteilungsflächen (43) zu erzeugen, indem die Entfernungsfläche (42) unterteilt wird,

einer Werkzeugpfad-Berechnungseinheit (24), die dazu konfiguriert ist, für jede Unterteilungsfläche (43) Werkzeugpfade zu erzeugen, die dazu verwendet werden, die Unterteilungsflächen (43) durch entsprechende Elemente der Verarbeitungsmaschinen (11) zu entfernen, und

einer Verarbeitungsdauer-Berechnungseinheit (25), die dazu konfiguriert ist, eine Kombination der Werkzeugpfade so zu berechnen, dass eine Zeitspanne zum Entfernen aller Verteilungsflächen (43) minimal wird,

**dadurch gekennzeichnet, dass** die Unterteilungsflächen-Berechnungseinheit (23) dazu ausgelegt ist, die Unterteilungsflächen (43) zu erzeugen, indem die Entfernungsfläche (42) durch Ebenen (420-423) unterteilt wird, die Grenzen für den bewegbaren Bereich jeder Verarbeitungsmaschine (11) definieren, die ein Kandidat zum Durchführen der Arbeit zum Entfernen der Entfernungsfläche (42) ist, und wobei die Ebenen (420-423) für die mehreren Verarbeitungsmaschinen (11) und für verschiedene Winkel, in denen das Material ergriffen wird, getrennt berechnet werden.

2. Prozessplanungs-Unterstützungsgerät (20) nach Anspruch 1, ferner mit einer Berechnungsergebnis-Ausgabeeinheit (26), die dazu konfiguriert ist, für die Kombination der durch die Verarbeitungsdauer-Berechnungseinheit (25) für jeden der Werkzeugpfade berechneten Werkzeugpfade ein Berechnungsergebnis auszugeben, das wenigstens eine der folgenden Informationen enthält:

Information über eine Reihenfolge, in der die Entfernung unter Verwendung von jedem der Werkzeugpfade ausgeführt wird,

Information über die entlang jedem der Werkzeugpfade zu entfernenden Unterteilungsflächen (43),

Information über die zum Entfernen der Unterteilungsflächen (43) zu verwendenden Verarbeitungsmaschinen (11), oder

Information über eine zum Entfernen der Unterteilungsflächen (43) bei Verwendung von jedem der Werkzeugpfade benötigte Zeit.

3. Prozessplanungs-Unterstützungsgerät (20) nach Anspruch 2, wobei die Verarbeitungsdauer-Berechnungseinheit (25) dazu ausgelegt ist, die Information über eine vorbestimmte Anzahl von Kombinationen der Werkzeugpfade in aufsteigender Reihenfolge der Dauer zu berechnen, die zum Entfernen aller Verteilungsflächen (43) von der Kombination benötigt wird, die die minimale Dauer in Anspruch nimmt, und

die Berechnungsergebnis-Ausgabeeinheit (26) dazu ausgelegt ist, die Berechnungsergebnisse bezüglich der vorbestimmten Anzahl von Kombinationen der Werkzeugpfade auszugeben, die durch die Verarbeitungsdauer-Berechnungseinheit (25) berechnet wurden, wobei die Berechnungsergebnisse Information über die aufsteigende Reihenfolge der Dauer enthalten, die zum Entfernen aller Unterteilungsflächen (43) von der Kombination benötigt werden, die die minimale Dauer in Anspruch nimmt.

4. Prozessplanungs-Unterstützungsgerät (20) nach Anspruch 1, wobei
die Entfernungsflächen-Berechnungseinheit (22) dazu ausgelegt ist, die Entfernungsfläche (42) für jede Produktform (40) von mehreren Produkten zu berechnen, und
die Verarbeitungsdauer-Berechnungseinheit (25) dazu ausgelegt ist, für jedes der mehreren Produkte eine Kombination der Werkzeugpfade so zu berechnen, dass eine Zeitspanne zum Entfernen aller Unterteilungsflächen (43) minimal wird.

5. Programm zum Steuern eines Computers, so dass dieser als ein Prozessplanungs-Unterstützungsgerät (20) arbeitet, das die Erzeugung von Steuerdaten für mehrere Verarbeitungsmaschinen (11) unterstützt, wobei das Programm den Computer zur Umsetzung folgender Funktionen steuert:

eine Entfernungsbereichs-Berechnungsfunktion zum Berechnen einer Entfernungsfläche (42) basierend auf einer Differenz zwischen einer Produktform (40) eines Produkts und einer Materialform (41) eines zur Verarbeitung des Produkts verwendeten Materials,
eine Unterteilungsflächen-Berechnungsfunktion zum Erzeugen mehrerer Unterteilungsflächen (43), indem die Entfernungsfläche (42) durch Ebenen (420-423) unterteilt wird, die Grenzen für einen bewegbaren Bereich jeder Verarbeitungsmaschine (11) definieren, die ein Kandidat zum Durchführen der Arbeit zum Entfernen der Entfernungsfläche (42) ist, und wobei die Ebenen (420-423) für die mehreren Verarbeitungsmaschinen (11) und für verschiedene Winkel, in denen das Material ergriffen wird, getrennt berechnet werden,
eine Werkzeugpfad-Berechnungsfunktion, um für jede Unterteilungsfläche (43) Werkzeugpfade zu erzeugen, die dazu verwendet werden, die Unterteilungsflächen (43) durch entsprechende Elemente der Verarbeitungsmaschinen (11) zu entfernen, und
eine Verarbeitungsdauer-Berechnungsfunktion zum Berechnen einer Kombination der Werkzeugpfade, so dass eine Zeitspanne zum Entfernen aller Verteilungsflächen (43) minimal wird.

6. Prozessplanungs-Unterstützungsverfahren für ein Prozessplanungs-Unterstützungsgerät (20), das die Erzeugung von Steuerdaten für mehrere Verarbeitungsmaschinen (11) unterstützt, wobei das Prozessplanungs-Unterstützungsverfahren aufweist:

einen Entfernungsbereichs-Berechnungsschritt, in dem durch das Prozessplanungs-Unterstützungsgerät (20) eine Entfernungsfläche (42) basierend auf einer Differenz zwischen einer Produktform (40) eines Produkts und einer Materialform (41) eines zur Verarbeitung des Produkts verwendeten Materials berechnet wird,
einen Unterteilungsflächen-Berechnungsschritt, in dem durch das Prozessplanungs-Unterstützungsgerät (20) mehrere Unterteilungsflächen (43) erzeugt werden, indem die Entfernungsfläche (42) durch Ebenen (420-423) unterteilt wird, die Grenzen für einen bewegbaren Bereich jeder Verarbeitungsmaschine (11) definieren, die ein Kandidat zum Durchführen der Arbeit zum Entfernen der Entfernungsfläche (42) ist, und wobei die Ebenen (420-423) für die mehreren Verarbeitungsmaschinen (11) und für verschiedene Winkel, in denen das Material ergriffen wird, getrennt berechnet werden,
einen Werkzeugpfad-Berechnungsschritt, in dem durch das Prozessplanungs-Unterstützungsgerät (20) für jede Unterteilungsfläche (43) Werkzeugpfade erzeugt werden, die dazu verwendet werden, die Unterteilungsflächen (43) durch entsprechende Elemente der Verarbeitungsmaschinen (11) zu entfernen, und
einen Verarbeitungsdauer-Berechnungsschritt, in dem durch das Prozessplanungs-Unterstützungsgerät (20) eine Kombination der Werkzeugpfade berechnet wird, so dass eine Zeitspanne zum Entfernen aller Verteilungsflächen (43) minimal wird.

**Revendications**

1. Appareil (20) de support de programme de traitement, qui supporte la création de données de commande pour une pluralité de machines de traitement (11), comprenant :

une unité (22) de calcul de zone d'enlèvement configurée pour calculer une zone d'enlèvement (42) sur la base d'une différence entre une forme (40) de produit d'un produit et une forme (41) de matériau d'un matériau utilisé pour traiter le produit,
une unité (23) de calcul de zones divisées configurée pour générer une pluralité de zones divisées (43) en divisant la zone d'enlèvement (42) ;
une unité (24) de calcul de trajectoires d'outils configurée pour générer des trajectoires d'outils, qui sont utilisées pour enlever les zones divisées (43) par certaines respectives des machines de traitement (11), pour chaque zone divisée (43) ; et
une unité (25) de calcul de temps de traitement configurée pour calculer une combinaison des trajectoires d'outils de manière à ce qu'une période de temps pour enlever toutes les zones divisées (43) devienne minimum, **caractérisé en ce que** l'unité (23) de calcul de zones divisées est adaptée à générer les zones divisées (43) en divisant la zone d'enlèvement (42) par des plans (420-423) qui définissent des limites de la plage de mobilité de chaque machine de traitement (11) étant une candidate pour exécuter un travail pour enlever la zone d'enlèvement (42) et lesquels plans (420-423) ont été calculés séparément pour ladite pluralité de machines de traitement (11) et pour différents angles auxquels le matériau est en préhension.

2. Appareil (20) de support de programme de traitement selon la revendication 1, comprenant en outre une unité (26) de délivrance en sortie de résultat de calcul configurée pour délivrer en sortie, pour la combinaison des trajectoires d'outils calculée par l'unité (25) de calcul de temps de traitement pour chacune des trajectoires d'outils, un résultat de calcul comprenant au moins une parmi :

une information sur un ordre dans lequel l'enlèvement en utilisant chacune des trajectoires d'outils est exécuté,
une information sur les zones divisées (43) devant être enlevées le long de chacune des trajectoires d'outils,
une information sur les machines de traitement (11) devant être utilisées pour enlever les zones divisées (43), ou
une information sur une durée requise pour enlever les zones divisées (43) en utilisant chacune des trajectoires d'outils.

3. Appareil (20) de support de programme de traitement selon la revendication 2, dans lequel :

l'unité (25) de calcul de temps de traitement est adaptée à calculer les informations sur un nombre prédéterminé de combinaisons des trajectoires d'outils par ordre ascendant de la durée requise pour enlever toutes les zones divisées (43) à partir de la combinaison réalisant la durée minimum ; et
l'unité (26) de délivrance en sortie de résultat de calcul est adaptée à délivrer en sortie les résultats de calculs concernant le nombre prédéterminé de combinaisons des trajectoires d'outils calculées par l'unité (25) de calcul de temps de traitement, les résultats de calculs comprenant des informations sur l'ordre ascendant de la durée requise pour enlever toutes les zones divisées (43) à partir de la combinaison réalisant la durée minimum.

4. Appareil (20) de support de programme de traitement selon la revendication 1, dans lequel :

l'unité (22) de calcul de zone d'enlèvement est adaptée à calculer la zone d'enlèvement (42) pour chacune des formes (40) de produits d'une pluralité de produits ; et
l'unité (25) de calcul de temps de traitement est adaptée à calculer, pour chacun de la pluralité de produits, une combinaison des trajectoires d'outils de manière à ce qu'une période de temps pour enlever toutes les zones divisées (43) devienne minimum.

5. Programme pour faire en sorte qu'un ordinateur fonctionne comme un appareil (20) de support de programme de traitement, qui supporte la création de données de commande pour une pluralité de machines de traitement (11), le programme faisant en sorte que l'ordinateur réalise :

une fonction de calcul de zone d'enlèvement pour calculer une zone d'enlèvement (42) sur la base d'une différence entre une forme (40) de produit d'un produit et une forme (41) de matériau d'un matériau utilisé pour traiter le produit ;
une fonction de calcul de zones divisées pour générer une pluralité de zones divisées (43) en divisant la zone d'enlèvement (42) par des plans (420-423) qui définissent des limites d'une plage de mobilité de chaque machine de traitement (11) étant une candidate pour exécuter un travail pour enlever la zone d'enlèvement (42) et lesquels plans (420-423) ont été calculés séparément pour ladite pluralité de machines de traitement (11) et pour différents angles auxquels le matériau est en préhension ;
une fonction de génération de trajectoires d'outils pour générer des trajectoires d'outils, qui sont utilisées pour enlever les zones divisées (43) par certaines respectives des machines de traitement (11), pour chaque zone divisée (43) ; et
une fonction de calcul de temps de traitement pour calculer une combinaison des trajectoires d'outils de manière à ce qu'une période de temps pour enlever toutes les zones divisées (43) devienne minimum.

6. Procédé de support de planification de traitement pour un appareil (20) de support de programme de traitement, qui supporte la création de données de commande pour une pluralité de machines de traitement (11), le procédé de support de planification de traitement comprenant :

une étape de calcul de zone d'enlèvement pour calculer, par l'appareil (20) de support de programme de traitement, une zone d'enlèvement (42) sur la base d'une différence entre une forme (40) de produit d'un produit et une forme (41) de matériau d'un matériau utilisé pour traiter le produit ;
une étape de calcul de zones divisées pour générer, par l'appareil (20) de support de programme de traitement, une pluralité de zones divisées (43) en divisant la zone d'enlèvement (42) par des plans (420-423) qui définissent des limites d'une plage de mobilité de chaque machine de traitement (11) étant une candidate pour exécuter un travail pour enlever la zone d'enlèvement (42) et lesquels plans (420-423) ont été calculés séparément pour ladite pluralité de machines de traitement (11) et pour différents angles auxquels le matériau est en préhension ;
une étape de génération de trajectoires d'outils pour générer, par l'appareil (20) de support de programme de traitement, des trajectoires d'outils, qui sont utilisées pour enlever les zones divisées (43) par certaines respectives des machines de traitement (11), pour chaque zone divisée (43) ; et
une étape de calcul de temps de traitement pour calculer, par l'appareil (20) de support de programme de traitement, une combinaison des trajectoires d'outils de manière à ce qu'une période de temps pour enlever toutes les zones divisées (43) devienne minimum.

PROCESSING SYSTEM 10

11-1                    11-2

PROCESSING          PROCESSING          . . .
MACHINE             MACHINE

                                        12

                                        20

PROCESS SCHEDULE
SUPPORT DEVIVCE

Fig.1

PROCESS SCHEDULE SUPPORT APPARATUS 20

Fig.2

Fig.3

EP 2 725 439 B1

PROCESSING MACHINE DATA 210

| PROCESSING MACHINE ID | PROCESSING MACHINE NAME | AXIS CONFIGURATIUON | SETUP TIME [MINUTE] | STROKE [mm] | ARRANGEMENT TIME [MINUTE] | . . . |
|---|---|---|---|---|---|---|
| M001 | AAA | THREE AXES | 10 | X : 0~500 | 30 | . . . |
| | | | | Y : −300~100 | 50 | . . . |
| | | | | Z : −300~100 | 60 | . . . |
| M002 | BBB | FIVE AXES | 12 | X : 0~400 | 30 | . . . |
| | | | | Y : −200~100 | 40 | . . . |
| | | | | ⋮ | ⋮ | . . . |
| ⋮ | ⋮ | ⋮ | ⋮ | ⋮ | ⋮ | . . . |

Fig.4

TOOL DATA 211

| | 2110 | 2111 | 2112 | 2113 | 2114 | 2115 | 2116 | |
|---|---|---|---|---|---|---|---|---|
| | TOOL ID | PROCESSING MACHINE ID | TOOL DIAMETER [mm] | TOOL TIP RADIUS [mm] | TOOL LENGTH [mm] | HOLDER DIAMETER [mm] | HOLDER LENGTH [mm] | · · · |
| | T001 | M001 | 30 | 3 | 100 | 30 | 100 | · · · |
| | T002 | M005 | 40 | 6 | 100 | 50 | 200 | · · · |
| | ⋮ | ⋮ | ⋮ | ⋮ | ⋮ | ⋮ | ⋮ | · · · |

HOLDER

TOOL

Fig.5

PROCESSING MACHINE CONDITION DATA 212

2120

| M001 | M002 | M003 | M004 | ・・・ |

2121

| CONDITION ID | TOOL ID | NUMBER OF REVOLUTIONS [rpm] | FEED RATE [mm/min] | FEED PER TOOTH [mm/t] | CUTTING SPEED [m/min] | AXIAL CUTTING [mm] | RADIAL CUTTING [mm] | ・・・ |
|---|---|---|---|---|---|---|---|---|
| C001 | T003 | 700 | 1600 | 0.5 | 100 | 1 | 1 | ・・・ |
| C002 | T012 | 1280 | 3800 | 0.6 | 200 | 0.5 | 0.5 | ・・・ |
| ⋮ | ⋮ | ⋮ | ⋮ | ⋮ | ⋮ | ⋮ | ⋮ | ・・・ |

2122   2123   2124   2125   2126   2127   2128   2129

EP 2 725 439 B1

Fig.6

PRODUCT CAD DATA 213

| PRODUCT ID | CAD DATA | MATERIAL ID |
|------------|----------|-------------|
| P001 | * * * * * | M001 |
| P002 | * * * * * | M002 |
| ⋮ | ⋮ | ⋮ |

Fig.7

20

## MATERIAL CAD DATA 214

| MATERIAL ID | CAD DATA |
|:---:|:---:|
| M001 | * * * * * |
| M002 | * * * * * |
| ⋮ | ⋮ |

2140     2141

Fig.8

400

40

401

Fig.9

40

(a)

41

(b)

42

(c)

Fig.10

Fig.11

Fig.12

RESULT DISPLAY

P001  P002  P003  P004

D001  D002  D003  D004  D005

TOTAL PROCESSING TIME:4 HOURS 21 MINUTES

| PROCESS NUMBER | AREA ID | PROCESSING MACHINE NAME | PROCESSING TIME [MINUTES] |
|---|---|---|---|
| 1 | D005 | CCC | 30 |
| 2 | D007 | CCC | 45 |
| 3 | D011 | CCC | 40 |
| 4 | D010 | CCC | 25 |
| 5 | D003 | AAA | 15 |
| 6 | D016 | AAA | 20 |

EXE

Fig.13

```
                          ( START )
                              |
                              v
              SELECT ONE UNSELECTED    | S100
                    PRODUCT            |
                              |
                              v
                 CALCULATE            S101
              ARRANGEMENT PLANE
                              |
                              v
                 CALCULATE            S102
               REMOVAL AREA
                              |
                              v
                 CALCULATE            S103
               DIVIDED AREA
                              |
                              v
              SELECT ONE UNSELECTED    S104
                 DIVIDED AREA
                              |
                              v
              SELECT ONE UNSELECTED    S105
               PROCESSING MACHINE
                              |
                              v
                 CALCULATE            S106
               PROCESSING TIME
                              |
                              v
       No    HAVE ALL PROCESSING MACHINE   S107
      <----     BEEN SELECTED?
                              | Yes
                              v
       No    HAVE ALL DIVIDED AREAS         S108
      <----     BEEN SELECTED?
                              | Yes
                              v
           CALCULATION COMBINATION OF       S109
         PROCESSING TIMES WHICH HAS MINIMUM
              TOTAL PROCESSING TIME
                              |
                              v
       No    HAVE ALL PRODUCTS             S110
      <----     BEEN SELECTED?
                              | Yes
                              v
         CREATE AND DISPLAY RESULT    S111
              DISPLAY SCREEN
                              |
                              v
         TRANSFER DATA ON EACH    S112
              TOOL PATH
                              |
                              v
                          ( END )
```

Fig.14

PROCESS SCHEDULE SUPPORT APPARATUS 20

12

21

STORAGE UNIT

PROCESSING MACHINE DATA 210

TOOL DATA 211

PROCESSING MACHINE CONDITION DATA 212

PRODUCT CAD DATA 213

MATERIAL CAD DATA 214

INPUT AMOUNT DATA 215

REMOVAL AREA CALCULATION UNIT 22

DIVIDED AREA CALCULATION UNIT 23

TOOL PATH CALCULATION UNIT 24

PROCESSING TIME CALCULATION UNIT 25

CALCULATION RESULT OUTPUT UNIT 26

DATA SETTING UNIT 27

DISPLAY DEVICE 200

INPUT DEVICE 201

Fig.15

INPUT AMOUNT DATA 215

| PRODUCT ID | MANUFACTURE QUANTITY | INPUT DATA |
|------------|----------------------|------------|
| P001 | 30 | 2012/8/3 |
| P002 | 20 | 2012/8/3 |
| ⋮ | ⋮ | ⋮ |

2150 / 2151 / 2152

Fig.16

PROCESSING MACHINE ALLOCATION

| PROCESSING MACHINE NAME | PROCESS NUMBER | DATE |
|---|---|---|
| | | AUGUST 1 · · · · AUGUST 2 |
| | | 9 10 11 12 13 14 15 16 17 18 19 20 21 22 23 0 1 2 3 4 5 6 |
| AAA | 1 | P001 |
| | 1 | P003 |
| | 3 | |
| BBB | 1 | P031 |
| | 1 | P004 |
| | 2 | P006 |
| CCC | 3 | P027 |
| | 4 | P008 |
| | 2 | P031 |

60
65
63
64
62
61

Fig.17

30

COMPUTER 70

Fig.18

**EP 2 725 439 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04372002 B
- EP 1443374 A2
- EP 0503642 A2